# FASCICULE DE BREVET EUROPEEN

(11) **EP 3 077 257 B1**
(45) Date de publication et mention de la délivrance du brevet: **03.01.2018**
(21) Numéro de dépôt: 14805236.8
(22) Date de dépôt: 25.11.2014
(51) Int. Cl.: B60S 1/38, B60S 1/40

(54) **DISPOSITIF DE CONNEXION BRAS-BALAI, BALAI D'ESSUIE-GLACE ET ENSEMBLE D'ESSUYAGE**
WISCHARM-VERBINDUNGSVORRICHTUNG, SCHEIBENWISCHER UND WISCHANORDNUNG
ARM-WIPER CONNECTION DEVICE, WINDSHIELD WIPER AND WIPING ASSEMBLY

(30) Priorité: 03.12.2013 FR 1362039
(43) Date de publication de la demande: 12.10.2016
(73) Titulaire: Valeo Systèmes d'Essuyage, 78322 Le Mesnil Saint Denis (FR)
(72) Inventeur: ESPINASSE, Philippe, F-63114 Coudes (FR); MONEYRON, Patrick, F-63670 Le Cendre (FR); TERRASSE, William, F-63270 Vic Le Comte (FR)
(74) Mandataire: Vincent, Catherine Marie Marguerite
(86) Numéro de dépôt international: PCT/EP2014/075582
(87) Numéro de publication internationale: WO 2015/082261

(56) Documents cités:
- DE-A1- 10 016 850
- DE-A1-102011 084 471
- FR-A1- 2 365 717
- US-A1- 2008 201 892

## Description

### DOMAINE TECHNIQUE

La présente invention concerne un dispositif de connexion bras-balai, un balai d'essuie-glace et un ensemble d'essuyage pour panneaux vitrés de véhicules automobiles.

### ETAT DE LA TECHNIQUE

Les balais d'essuie-glace comportent des moyens de connexion leur permettant d'être couplés aux bras d'actionnement du véhicule automobile. Certains moyens de connexion sont dits « à axe de pivotement latéral ». Pour cela, le balai présente une cavité centrale comportant un axe transversal autour duquel s'articule une extrémité du bras.

L'articulation du balai par rapport au bras permet une amplitude de pivotement élevée, de sorte qu'il est possible que le balai se retourne par rapport au panneau vitré. Le côté opposé à la lame d'essuyage peut alors venir en contact avec le panneau vitré et le détériorer.

Pour pallier cela, certains bras d'actionnement comportent une languette flexible à l'arrière de l'extrémité, qui coopère par déformation élastique avec la cavité centrale du balai dans une position de verrouillage pour laquelle le pivotement du balai par rapport au bras est limité. Le passage en position de verrouillage est réalisé manuellement par montage en force de la languette flexible dans une fente de la cavité centrale.

On observe cependant qu'au bout d'un certain nombre d'enclenchements/dés-enclenchements des balais, la languette tend à être matée, voire limée. Il s'ensuit une usure prématurée du bras d'actionnement et le risque que la fonction anti-retournement ne soit plus assurée par ce dernier DE-A-10016850 montre le préambule de la revendication 1.

### EXPOSE DE L'INVENTION

Un des buts de la présente invention est de proposer un dispositif de connexion bras-balai, un balai d'essuie-glace et un ensemble d'essuyage pour véhicules automobiles, permettant de garantir la fonction anti-retournement du balai par rapport au panneau vitré, plus fiable et plus robuste que ceux de l'état de la technique.

A cet effet, l'invention à pour objet un dispositif de connexion entre un bras et un balai d'essuie-glace, ledit dispositif comprenant un élément de liaison comprenant une cavité de connexion, ladite cavité de connexion comprenant un axe transversal configuré pour coopérer avec une extrémité du bras d'actionnement pour articuler le balai d'essuie-glace audit bras d'actionnement, caractérisé en ce qu'une extrémité de la cavité de connexion comprend une forme asymétrique selon un plan sagittal du balai d'essuie-glace, ladite forme asymétrique formant une unique paroi supérieure de butée coopérant avec une excroissance transversale d'une languette de l'extrémité du bras d'actionnement pour limiter le pivotement du balai autour du bras d'actionnement.

L'élément de liaison mentionné ci-dessus peut-être constitué d'une ou plusieurs pièces, mais est préférablement réalisé d'une seule pièce, notamment d'une seule pièce en matière plastique.

Ainsi, la paroi supérieure la plus proche du centre de la cavité de connexion empêche le retournement du balai par la mise en butée en pivotement de la languette. Cette découpe de la fente de la cavité de connexion plus large que celles de l'état de la technique permet à la languette du bras d'actionnement de fléchir au moment des verrouillages/déverrouillages, au passage de l'excroissance dans la cavité de connexion. Ce fléchissement de la languette permet de limiter les frottements entre la cavité de connexion et l'excroissance transversale de la languette et donc, l'usure du bras. La fonction anti-retournement peut donc durer plus longtemps.

Selon un exemple de réalisation, l'axe transversal comprend au moins une cavité. Par « cavité de l'axe transversal » au sens de l'invention, on entend notamment un creux ou espace évidé dans le corps de l'axe transversal. La cavité de l'axe transversal permet de réduire de façon localisée la quantité de matière nécessaire à la réalisation de l'axe transversal et par conséquent de réduire les risques de retassures au cours de la fabrication du balai, suite au refroidissement de la cavité de connexion. On augmente par conséquent la résistance de l'axe transversal. Egalement, la ou les cavités de l'axe transversal permettent de mieux répartir le matériau de moulage de la cavité de connexion, évitant la formation de bulles d'air. Il doit être entendu que les méplats réalisés en surface de l'axe transversal de façon connue dans l'art antérieur, ne constituent pas des cavités au sens de l'invention, notamment car ils ne visent ni à empêcher les retassures de moulage ni à empêcher la formation de bulles d'air à l'intérieur de l'axe transversal.

Selon un autre exemple de réalisation, ladite cavité de l'axe transversal est agencée à une extrémité longitudinale de l'axe transversal.

Selon un encore autre exemple de réalisation, ladite cavité de l'axe transversal s'étend depuis un flanc de la cavité de connexion.

Selon un encore autre exemple de réalisation, ladite cavité de l'axe transversal est traversante. Par « traversante », on entend que ladite cavité traverse l'axe transversal de part en part.

Selon un exemple de réalisation, la cavité de connexion comprend deux cavités traversantes ménagées respectivement à une extrémité de l'axe transversal raccordée à un flanc respectif de la cavité de connexion.

Les cavités traversantes traversent l'axe transversal de part en part. Elles sont localisées à la zone de contact entre l'axe transversal et les flancs de la cavité de connexion, ce qui permet de diminuer la surface de cette zone de contact. On évite ainsi les risques de retassures au cours de la fabrication du balai, suite au refroidissement de la cavité de connexion, ce qui permet d'augmenter la résistance de l'axe transversal. Egalement, les cavités traversantes permettent de mieux répartir le matériau de moulage de la cavité de connexion, évitant la formation de bulles d'air.

Selon un exemple de réalisation, la direction principale de l'au moins une cavité croise l'axe central de l'axe transversal.

Selon un exemple de réalisation, la direction principale de l'au moins une cavité est perpendiculaire à l'axe central de l'axe transversal.

Selon un exemple de réalisation, l'axe transversal comprend au moins un méplat. Ledit méplat est de préférence perpendiculaire à au moins un flanc de la cavité de connexion.

Selon un exemple de réalisation, la direction principale de l'au moins une cavité est parallèle au méplat.

Selon un exemple de réalisation, la cavité de connexion est obtenue par moulage, notamment d'une matière plastique.

L'invention a aussi pour objet un balai d'essuie-glace comprenant un dispositif de connexion selon l'une quelconque des définitions ci-dessus.

L'invention a encore pour objet un ensemble d'essuyage caractérisé en ce qu'il comprend un balai d'essuie-glace tel que décrit précédemment et un bras d'actionnement.

### DESCRIPTION SOMMAIRE DES DESSINS

D'autres avantages et caractéristiques apparaîtront à la lecture de la description d'un exemple non limitatif de réalisation de l'invention, ainsi que sur les figures annexées sur lesquelles :
- la figure 1 représente une vue schématique d'un balai d'essuie-glace assemblé à un bras de véhicule automobile, en position d'essuyage,
- la figure 2 représente une vue agrandie de la cavité de connexion du balai de la figure 1,
- la figure 3 représente une vue en perspective d'une extrémité du bras d'actionnement destinée à coopérer avec le balai d'essuie-glace de la figure 2,
- la figure 4 représente une vue de dessus d'un détail de la cavité de connexion du balai d'essuie-glace de la figure 2,
- la figure 5 représente une vue schématique en coupe d'un dispositif de connexion bras-balai selon un exemple de réalisation, en position d'assemblage,
- la figure 6 représente une vue analogue à la figure 5 en position de verrouillage, prêt à être dés-enclenché, et
- la figure 7 représente une vue analogue à la figure 6 en position de verrouillage et en position d'essuyage.

Sur ces figures, les éléments identiques ou analogues portent les mêmes numéros de référence.

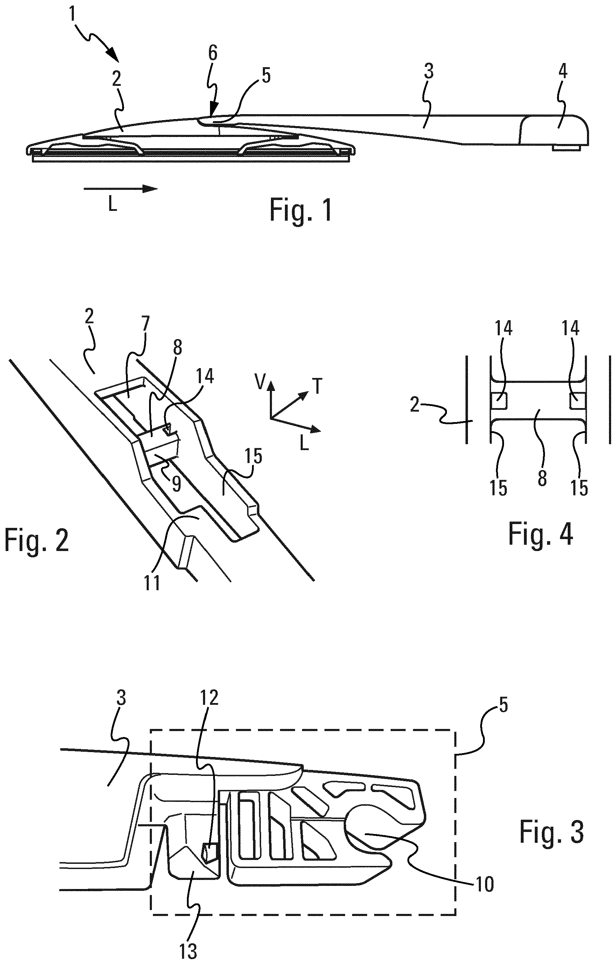

Dans la suite de la description, on adoptera à titre non limitatif des directions longitudinale, verticale et transversale indiquées sur la figure 4 par le trièdre (L, V, T) fixe par rapport au balai. La direction longitudinale L correspond à la direction principale des balais d'essuie-glaces à plat. Tel que le balai est illustré, le plan horizontal correspond au plan (L, T). L'orientation « supérieure » est désignée en référence à l'orientation de l'ensemble d'essuyage sur la figure 1.

### DESCRIPTION DÉTAILLÉE

Les figures 1 à 7 illustrent un exemple de réalisation d'un ensemble d'essuyage 1 comprenant un balai d'essuie-glace 2 pour véhicule automobile couplé à un bras d'actionnement 3. Cet ensemble d'essuyage 1 peut être agencé à l'avant du véhicule pour l'essuyage du pare-brise ou à l'arrière pour l'essuyage de la lunette arrière.

Le bras d'actionnement 3 comprend une tête pivotante 4 destinée à être entraînée en rotation pour l'essuyage du panneau vitré du véhicule. A l'extrémité opposée à la tête pivotante 4, le bras d'actionnement 3 comprend une extrémité 5 couplée au balai d'essuie-glace 2 au moyen d'un dispositif de connexion bras-balai 6.

Comme on peut mieux le voir sur la figure 2, le dispositif de connexion bras-balai 6 comprend un élément de liaison comprenant une cavité de connexion 7.

La cavité de connexion 7, par exemple traversante dans l'épaisseur du balai d'essuie-glace 2, est ménagée sensiblement au centre du balai 2. La cavité de connexion 7 s'étend principalement dans la direction principale longitudinale L du balai 2 qui correspond à la direction principale des balais d'essuie-glaces à plat.

La cavité de connexion 7 comprend un axe transversal 8 coopérant avec l'extrémité 5 du bras d'actionnement 3 pour articuler le balai 2 autour du bras 3.

La section de l'axe transversal 8 s'inscrit dans une section cylindrique de plus grande surface. L'axe transversal 8 comprend par exemple deux méplats 9 parallèles entre eux et au plan (V, T) et perpendiculaires aux flancs 15 de la cavité de connexion 7.

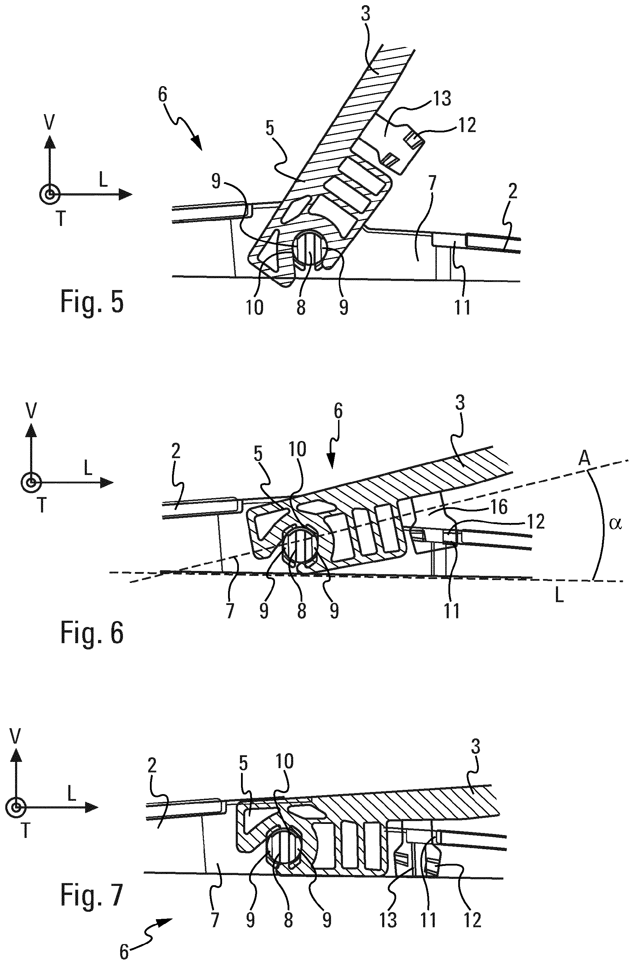

En référence à la figure 3, l'extrémité 5 du bras d'actionnement 3 comprend un logement d'articulation 10 partiellement cylindrique, complémentaire à la portion cylindrique de l'axe transversal 8 du balai 2. L'ouverture du logement d'articulation 10 coïncide avec la dimension la plus étroite de la section de l'axe transversal 8. Ainsi, lorsque l'axe transversal 8 du balai 2 est présenté à l'extrémité 5 du bras d'actionnement 3 avec l'orientation appropriée, l'axe transversal 8 du balai 2 peut être reçu dans le logement d'articulation 10 (figure 5). Dans cette position, dite d'assemblage, le balai 2 peut pivoter autour du bras d'actionnement 3 auquel il est articulé et peut être détaché du bras 3.

Le balai 2 peut également prendre une position de verrouillage (figures 6 et 7) dans laquelle le pivotement du balai 2 autour du bras d'actionnement 3 est limité, ce qui évite le retournement du balai 2 contre le panneau vitré ou même, la perte du balai 2 par exemple lors du nettoyage du balai 2. Dans cette position de verrouillage, le balai 2 et le bras d'actionnement 3 peuvent prendre la position d'essuyage ou la position débrayée.

Pour cela, une extrémité de la cavité de connexion 7 comprend une forme asymétrique selon un plan sagittal du balai d'essuie-glace, ladite forme asymétrique formant une unique paroi supérieure de butée 11 destinée à coopérer avec une excroissance transversale 12 d'une languette 13 de l'extrémité 5 du bras d'actionnement 3 pour limiter le pivotement du balai 2 autour du bras d'actionnement 3.

L'extrémité de la cavité de connexion 7 de forme asymétrique est agencée du côté de la cavité de connexion 7 destiné à coopérer avec la languette 13 du bras 3, elle-même agencée à l'arrière du logement d'articulation 10 sur l'extrémité 5 du bras 3.

L'excroissance transversale 12 s'étend dans la direction transversale du bras 3, du côté de la languette 12 coopérant avec la paroi supérieure de butée 11 afin de limiter le pivotement du balai d'essuie-glace 2 par rapport au bras d'actionnement 3 par la mise en butée de l'excroissance transversale 12 avec la paroi supérieure de butée 11.

La languette 12 est flexible de sorte que sa déformation élastique permet son fléchissement lors de son montage en force dans la cavité de connexion 7, en franchissant la paroi supérieure de butée 11.

Selon un exemple de réalisation, l'excroissance transversale 12 est agencée sur la languette 13 de manière à être en prise avec la paroi supérieure de butée 11 lorsque la direction principale A du bras d'actionnement 3 forme un angle α compris entre 10° et 50° avec la direction longitudinale du balai d'essuie-glace 2.

Selon un exemple de réalisation illustré sur les figures 2 et 3, l'axe transversal 8 comprend au moins une cavité traversante 14 agencée à une extrémité de l'axe transversal 8 raccordée à un flanc 15 de la cavité de connexion 7.

Les cavités traversantes 14 traversent l'axe transversal 8 de part en part. Elles sont localisées à la zone de contact entre l'axe transversal 8 et les flancs 15 de la cavité de connexion 7, ce qui permet de diminuer la surface de cette zone de contact. On évite ainsi les risques de retassures au cours de la fabrication du balai 2, suite au refroidissement de la cavité de connexion 7, ce qui permet d'augmenter la résistance de l'axe transversal 8. Egalement, les cavités traversantes 14 permettent de mieux répartir le matériau de moulage de la cavité de connexion 7, évitant la formation de bulles d'air.

Selon un exemple de réalisation illustré en figure 3, la cavité de connexion 7 comprend deux cavités traversantes 14, chaque cavité traversante 14 étant ménagée à une extrémité respective de l'axe transversal 8 raccordée à un flanc 15 respectif de la cavité de connexion 7.

Selon un exemple de réalisation, la cavité traversante 14 s'étend dans la direction verticale V, parallèlement aux méplats 9, de sorte que la direction principale de la cavité traversante 14 croise perpendiculairement l'axe central de l'axe transversal 8.

Ainsi, en position d'assemblage illustrée en figure 5, l'excroissance transversale 12 est à l'écart du balai 2.

En position de verrouillage illustrée par les figures 6 et 7, le pivotement du balai d'essuie-glace 2 par rapport au bras d'actionnement 3 est limité par la mise en butée de l'excroissance transversale 12 avec la paroi supérieure de butée 11. Le balai d'essuie-glace 2 ne peut pas s'échapper du bras d'actionnement 3.

En position d'essuyage (figure 7), la direction principale du balai d'essuie-glace 2 s'étend sensiblement dans la même direction que celle du bras d'actionnement 3. L'excroissance transversale 12 n'est pas en butée avec la paroi supérieure de butée 11. Le balai d'essuie-glace 2 est donc libre de pivoter autour de l'axe transversal 8 avec un angle limité entre la position d'essuyage et une position de butée, dite « prêt à être désenclenché », ce qui garantit l'anti-retournement du balai.

Ainsi, la paroi supérieure 11 la plus proche du centre de la cavité de connexion 7 empêche le retournement du balai 2 par la mise en butée en pivotement de la languette 13. Cette découpe de la fente de la cavité de connexion 7 plus large que celles de l'état de la technique permet à la languette 13 du bras d'actionnement 3 de fléchir au moment des verrouillages/déverrouillages, au passage de l'excroissance transversale 12 dans la cavité de connexion 7. Ce fléchissement de la languette 13 permet de limiter les frottements entre la cavité de connexion 7 et l'excroissance transversale 12 de la languette 13 et donc, l'usure du bras 3. La fonction anti-retournement peut donc durer plus longtemps.

## Revendications

1. Dispositif de connexion (6) entre un bras (3) et un balai d'essuie-glace (2), ledit dispositif comprenant un élément de liaison comprenant une cavité de connexion (7), ladite cavité de connexion (7) comprenant un axe transversal (8) configuré pour coopérer avec une extrémité (5) du bras d'actionnement (3) pour articuler le balai d'essuie-glace (2) audit bras d'actionnement (3), **caractérisé en ce qu'**une extrémité de la cavité de connexion (7) comprend une forme asymétrique selon un plan sagittal du balai d'essuie-glace (2), ladite forme asymétrique formant une unique paroi supérieure de butée (11) coopérant avec une excroissance transversale (12) d'une languette (13) de l'extrémité (5) du bras d'actionnement (3) pour limiter le pivotement du balai (2) autour du bras d'actionnement (3).

2. Dispositif de connexion (6) selon la revendication 1, dans lequel l'axe transversal (8) comprend au moins une cavité (14).

3. Dispositif de connexion (6) selon la revendication 2, dans lequel ladite cavité (14) de l'axe transversal (8) est agencée à une extrémité longitudinale de l'axe transversal (8).

4. Dispositif de connexion (6) selon l'une des revendications 2 ou 3, dans lequel ladite cavité (14) de l'axe transversal (8) s'étend depuis un flanc (15) de la cavité de connexion (7).

5. Dispositif de connexion (6) selon l'une des revendications 2 à 4, dans lequel ladite cavité (14) de l'axe transversal (8) est traversante.

6. Dispositif de connexion (6) selon l'une des revendications 2 à 5, dans lequel l'axe transversal (8) comprend deux cavités traversantes (14) ménagées respectivement à une extrémité de l'axe transversal (8) raccordée à un flanc (15) respectif de la cavité de connexion (7).

7. Dispositif de connexion (6) selon l'une des revendications 2 à 6, dans lequel la direction principale (V) de l'au moins une cavité (14) croise l'axe central de l'axe transversal (8).

8. Dispositif de connexion (6) selon l'une des revendications 2 à 7, dans lequel la direction principale (V) de l'au moins une cavité (14) est perpendiculaire à l'axe central de l'axe transversal (8).

9. Dispositif de connexion (6) selon l'une des revendications précédentes, dans lequel l'axe transversal (8) comprend au moins un méplat (9).

10. Dispositif de connexion (6) selon la revendication précédente, dans lequel ledit méplat (9) est perpendiculaire à au moins un flanc (15) de la cavité de connexion (7).

11. Dispositif de connexion (6) selon la revendication précédente, dans lequel la direction principale (V) de l'au moins une cavité (14) est parallèle au méplat (9).

12. Dispositif de connexion (6) selon l'une des revendications précédentes, dans lequel la cavité de connexion (7) est obtenue par moulage, notamment d'une matière plastique.

13. Balai d'essuie-glace (2) comprenant un dispositif de connexion (6) selon l'une quelconque des revendications précédentes.

14. Ensemble d'essuyage **caractérisé en ce qu'**il comprend un balai d'essuie-glace (2) selon la revendication précédente et un bras d'actionnement (3).

## Patentansprüche

1. Vorrichtung (6) zur Verbindung eines Arms (3) und eines Scheibenwischers (2), wobei die Vorrichtung ein Verbindungselement umfasst, das einen Verbindungshohlraum (7) umfasst, wobei der Verbindungshohlraum (7) eine Querachse (8) umfasst, die dazu konfiguriert ist, mit einem Ende (5) des Betätigungsarms (3) dahingehend zusammenzuwirken, den Scheibenwischer (2) an den Betätigungsarm (3) anzulenken, **dadurch gekennzeichnet, dass** ein Ende des Verbindungshohlraums (7) entlang einer Sagittalebene des Scheibenwischers (2) eine asymmetrische Form aufweist, wobei die asymmetrische Form eine einzige obere Anschlagwand (11) bildet, die mit einem transversalen Vorsprung (12) einer Zunge (13) des Endes (5) des Betätigungsarms (3) dahingehend zusammenwirkt, das Schwenken des Wischers (2) um den Betätigungsarm (3) zu begrenzen.

2. Verbindungsvorrichtung (6) nach Anspruch 1, wobei die Querachse (8) mindestens einen Hohlraum (14) umfasst.

3. Verbindungsvorrichtung (6) nach Anspruch 2, wobei der Hohlraum (14) der Querachse (8) an einem Längsende der Querachse (8) angeordnet ist.

4. Verbindungsvorrichtung (6) nach Anspruch 2 oder 3, wobei der Hohlraum (14) der Querachse (8) von einer Flanke (15) des Verbindungshohlraums (7) aus verläuft.

5. Verbindungsvorrichtung (6) nach einem der Ansprüche 2 bis 4, wobei der Hohlraum (14) der Querachse (8) ein Durchgangshohlraum ist.

6. Verbindungsvorrichtung (6) nach einem der Ansprüche 2 bis 5, wobei die Querachse (8) zwei Durchgangshohlräume (14) umfasst, die jeweils an einem mit einem jeweiligen Flansch (15) des Verbindungshohlraums (7) verbundenen Ende der Querachse (8) ausgebildet sind.

7. Verbindungsvorrichtung (6) nach einem der Ansprüche 2 bis 6, wobei die Hauptrichtung (V) des mindestens einen Hohlraums (14) die mittlere Achse der Querachse (8) kreuzt.

8. Verbindungsvorrichtung (6) nach einem der Ansprüche 2 bis 7, wobei die Hauptrichtung (V) des mindestens einen Hohlraums (14) senkrecht zur mittleren Achse der Querachse (8) verläuft.

9. Verbindungsvorrichtung (6) nach einem der vorhergehenden Ansprüche, wobei die Querachse (8) mindestens eine Abflachung (9) umfasst.

10. Verbindungsvorrichtung (6) nach dem vorhergehenden Anspruch, wobei die Abflachung (9) senkrecht zu mindestens einem Flansch (15) des Verbindungshohlraums (7) verläuft.

11. Verbindungsvorrichtung (6) nach dem vorhergehenden Anspruch, wobei die Hauptrichtung (V) des mindestens einen Hohlraums (14) parallel zur Abflachung (9) verläuft.

12. Verbindungsvorrichtung (6) nach einem der vorhergehenden Ansprüche, wobei der Verbindungshohlraum (7) durch Formen, insbesondere eines Kunststoffmaterials, erhalten wird.

13. Scheibenwischer (2), der eine Verbindungsvorrichtung (6) nach einem der vorhergehenden Ansprüche umfasst.

14. Wischanordnung, **dadurch gekennzeichnet, dass** sie einen Scheibenwischer (2) nach dem vorhergehenden Anspruch und einen Betätigungsarm (3) umfasst.

## Claims

1. Connection device (6) for connecting an arm (3) and a windscreen wiper (2), said device comprising a connection element comprising a connection cavity (7), said connection cavity (7) comprising a transverse shaft (8) designed to cooperate with an end (5) of the actuation arm (3) in order to articulate the windscreen wiper (2) to said actuation arm (3), **characterized in that** one end of the connection cavity (7) comprises an asymmetric shape in a sagittal plane of the windscreen wiper (2), said asymmetric shape forming a single upper abutment wall (11) cooperating with a transverse protuberance (12) of a tongue (13) of the end (5) of the actuation arm (3) in order to limit the pivoting of the wiper (2) about the actuation arm (3).

2. Connection device (6) according to Claim 1, wherein the transverse shaft (8) comprises at least one cavity (14).

3. Connection device (6) according to Claim 2, wherein said cavity (14) in the transverse shaft (8) is arranged at a longitudinal end of the transverse shaft (8) .

4. Connection device (6) according to either of Claims 2 and 3, wherein said cavity (14) in the transverse shaft (8) extends from a flank (15) of the connection cavity (7).

5. Connection device (6) according to one of Claims 2 to 4, wherein said cavity (14) in the transverse shaft (8) is a through-cavity.

6. Connection device (6) according to one of Claims 2 to 5, wherein the transverse shaft (8) comprises two through-cavities (14) formed one at each end of the transverse shaft (8), each end being connected to a respective flank (15) of the connection cavity (7).

7. Connection device (6) according to one of Claims 2 to 6, wherein the primary direction (V) of the at least one cavity (14) crosses the central axis of the transverse shaft (8).

8. Connection device (6) according to one of Claims 2 to 7, wherein the primary direction (V) of the at least one cavity (14) is perpendicular to the central axis of the transverse shaft (8).

9. Connection device (6) according to one of the preceding claims, wherein the transverse shaft (8) comprises at least one flat portion (9).

10. Connection device (6) according to the preceding claim, wherein said flat portion (9) is perpendicular to at least one flank (15) of the connection cavity (7) .

11. Connection device (6) according to the preceding claim, wherein the primary direction (V) of the at least one cavity (14) is parallel to the flat portion (9) .

12. Connection device (6) according to one of the preceding claims, wherein the connection cavity (7) is produced by moulding, in particular by moulding a plastics material.

13. Windscreen wiper (2) comprising a connection device (6) according to any one of the preceding claims.

14. Wiping assembly **characterized in that** it comprises a windscreen wiper (2) according to the preceding claim and an actuation arm (3).
